# EUROPEAN PATENT APPLICATION

(11) **EP 1 367 321 A1**
(43) Date of publication of application: **03.12.2003**
(21) Application number: 02011920.2
(22) Date of filing: 29.05.2002
(51) Int. Cl.: F21V 23/04, F21V 17/06, F21V 19/00

(54) **Energy-saving lamp including a photo diode**

(71) Applicant: All-Line Inc., Taipei (TW)
(72) Inventor: Stekelenburg, Albert, Taipei (TW)
(74) Representative: LOUIS- PÖHLAU- LOHRENTZ

(57) **Abstract**

An ernergy-saving lamp including a photo diode having a lamp head (10), a receiving body (20), an outer shell (30), a cover (40) and a photo sensor (50). Projections and indents are provided on the inner circumference (21) of the receiving body (20), said body, receiving a base (60) and a circuit block (70). The lamp-tube (80) is fixed on the base (60); the circumference of the base including screw thread (62) and a wire opening (61). The photo sensor (50) is provided at the end of the wire (72), respective projections are provided at lower end of its screw thread (62). The base includes the circuit of the energy-saving lamp and a photocell is provided thereon through an IC. The end with smaller diameter of the outer shell (30) is provided with inner screw thread (32). Between the outer shell (30) and the cover (40) is a clipping connection. The photo sensor (50) responding to the brightness controls the switch-on/switch-off state.

## Description

### Field of the Invention

The Present invention relates to a photo diode lamp, i.e. its structure for lamps and lanterns can respond the external brightness and is acting for automatic controlling switch-on/switch-off.

### Background of the Invention

The energy-saving lamps and lanterns are adapted for long-time illumination; but which are damageable, then a cover is needed for protection; the lamps and lanterns with photo sensor which responds the brightness of the external environment and is acting automatic controlling switch-on/switch-off, are became to a prior art; however, when both components are to be integrated, i.e. when the photo sensor is to be installed on the outer shell of the energy-saving type lamps and lanterns. There is no such a product like this in the market; mainly it is because the energy-saving lamp and the lanterns with photo sensor are not compatible. In order to make them compatible, the circuit technology and the assembly shall be improved, but it is important that which has a significant energy-saving effect.

### Summary of the Invention

The object of the present invention is to provide a photo diode lamp, the energy-saving lamps and lanterns can have a function of automatic controlling switch-on/switch-off by means of providing a simple structure, and thereby which enlarges its using scope and range.

The technical solution for embodying the above-mentioned object of the present invention is as below: its constitution includes a lamp head, a receiving body, and outer shell, a cover and a photo sensor, there are several projections and indents provided in the inner circumference at the upper side of the receiving body, a base and a circuit block are received in the receiving body, a lamp-tube is fixed on the base a screw-thread and a wire opening are provided on its circumference, and a photo sensor including photocell is provided from the end of the wire, there are several respective projections provided in the lower end of its screw-thread, the base of the circuit block is the energy-saving type lamps and lanterns circuit, a photocell is provided thereon through an IC; the outer shell is in the form of trumpet, its outer circumference at the end with larger diameter provides a fixing hole of the photocell and several slots, its hole part at the end with smaller diameter provides an inner screw-thread; there are a lot of transparent holes provided on the cover which is in the form arch surface with convex, several clipping members are extended from its planar end, between the receiving body and the base is a clipping, connection between the outer shell and the base is a screw-thread connection, between the photo sensor and the outer shell is a gluey connection and between the outer shell and the cover is a clipping connection.

### Brief Description of the Drawings

The photo diode lamp of the present invention will be now further described in combination with the embodiment shown in the drawings, wherein
Fig. 1 is a perspective view of the embodiment of the present invention;
Fig. 2 is an exploded view (sectional view in part) of the embodiment of the present invention;
Fig. 3 is a circuit diagram of the present invention;
Fig. 4 is a perspective view of the present invention in the using state.

### Detailed Description of the Preferred Embodiments

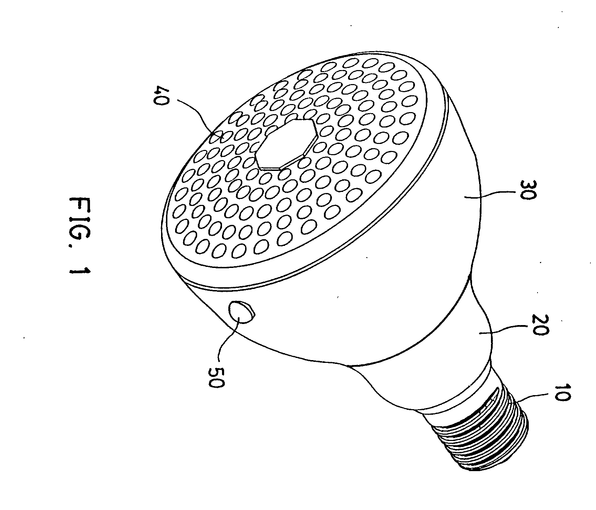

As shown in Fig. 1 is a configuration of the present invention, its constitution includes a lamp head 10, a receiving body 20, an outer shell 30, a cover 40 and a photo sensor 50. Wherein the lamp head 10 and the receiving body 20 are as same as the prior structure, the lamp head 10 is installed in the lamp socket (not shown), and the receiving body is used for receiving the inner structure as lamp tube etc.

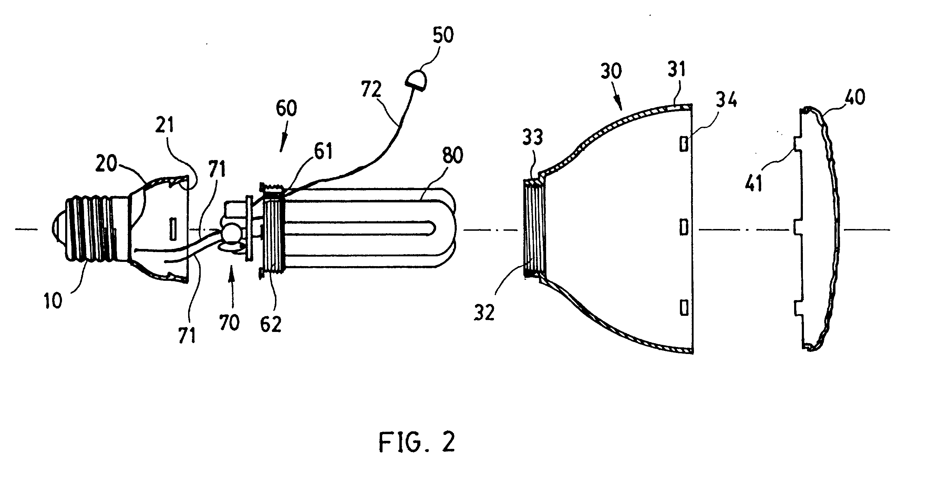

As shown in Fig. 2 is a perspective view in which the constitution of the present invention is further described, except the lamp head 10 and the receiving body 20, a cover 40, a circuit block 70 and a lamp-tube 80 are provided in the receiving body 20, a hole 31, an inner screw-thread 32 and several fixing slots 34 are provided on the outer shell 30, the hole 31 is used for gluing the photo sensor 50, the fixing slots 34 can match the clipping members 41 of the cover 40, and are then connected each other.

The inner of the receiving body 20 can receive the base 60 and the circuit block 70 and is used for fixing the wire 71 in the inner of he lamp head 10, the receiving body 20 is fixedly connected with the base 60, the base 60 is used for fixing the lamp-tube 80, there is an opening 61 provided on the base 60, from which another wire 72 pass through; a screw-thread 62 is provided on the circumference of the base 60, the screw-thread 62 is matched with the inner screw-thread 32 of the outer shell 30, the outer shell 30 is connected on the base 60, and the circumference 33 of the outer shell 30 is tightly connected in the inner circumference 21 of the receiving body 20.

When assembling the present invention, the wire 71 of the circuit block 70 is first welded to the inner of the lam head 10, the wire 72 is passed though the opening 61 and a photo sensor 50 including photocell is provided, the base 60 and the lamp-tube 80 are then fixed on the receiving body 21, the outer shell 30 is connected on the base 60, the photo sensor 50 is fixed on the hole 31, the cover 40 is finally connected on the outer shell 30.

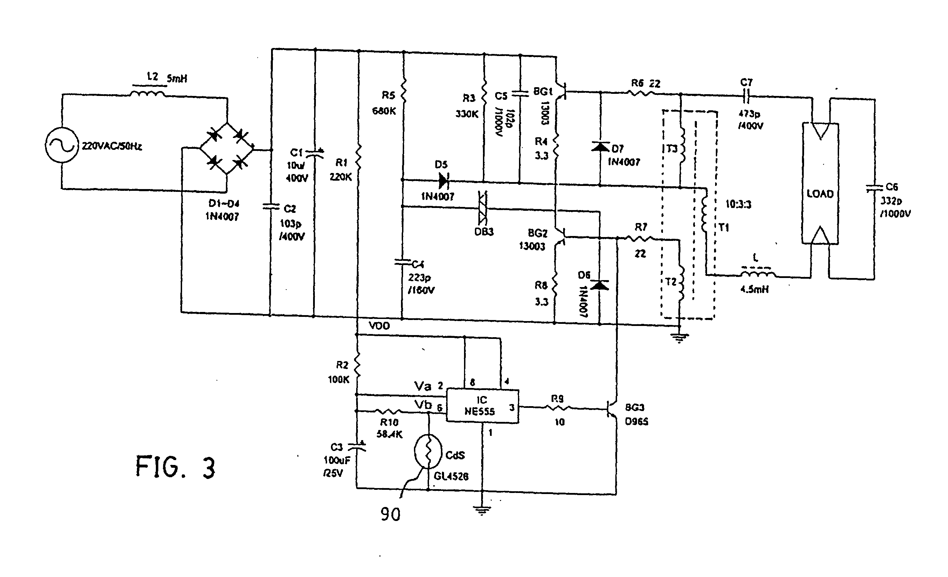

As shown in Fig. 3 is an embodiment of the circuit diagram of the present invention, in which the most part are the prior circuit of the energy-saving type lamps and lanterns, thereby the principle of its operation will be no longer described, the main characteristics of the present invention is the lower controlling circuit provided with the photocell 90, IC and photo sensor 50, he principle of its operation is as below:
1. when the voltage Va at the pin 2 of the IC is lower than the 1/3 VDD, the output of the IC is high voltage;
2. when the voltage Vb at the pin 6 of the IC is higher than the 2/3 VDD, the output of the IC is low voltage;
3. the photocell can change its inner resistance value, which is due to responding to the light strengthening or light weakening;
4. when the light is strengthening, the resistance value of the photocell will be lowered, Va and Vb values are then lowering, when the Va value is lower than 1/3 VDD, the output of IC is became to low voltage to control the output device, the lamp-tube will be switched off;
5. when the light is weakening, the resistance value of the photocell will be risen, Va and Vb values are then rising, when the Vb value is higher than 2/3 VDD, the output of IC is became to high voltage to control the output device, the lamp-tube will be switched in.

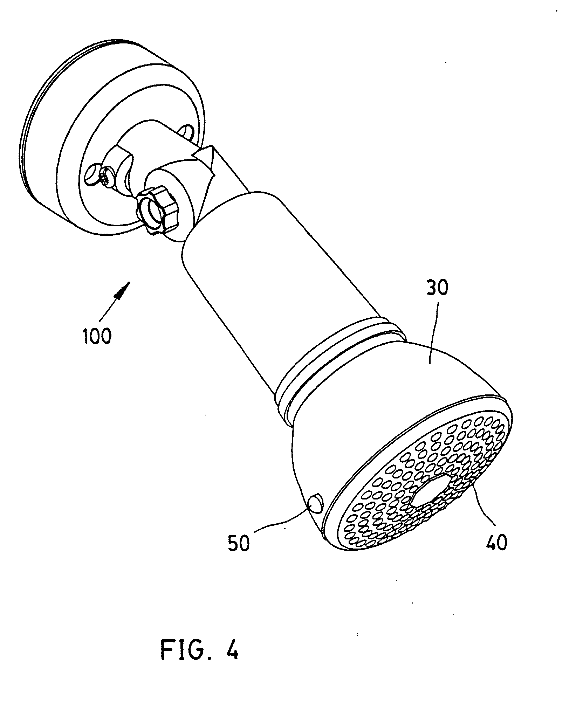

As shown in Fig. 4 is a using state of the present invention, at this time the photo diode lamp of the present invention is installed on the lamp socket 100 having the power supply. When the brightness of the circumference is changed, the resistance value of the photocell 90 which is positioned in the photo sensor 50 is changed, thereby the lamps and lanterns will be switched in/off.

In summary, the photo diode lamp of the present invention is provided with a photo sensor having photocell on the circuit block, which is provided on the fixing hole of the outer shell by means of the wire passing through the base, and the transparent cover is clipped at the front of the outer shell, its circuit is controlled by means of the photo sensor responding to the brightness of the circumference which is outside of the lamp, the lamps and lanterns are in a state of switch-on/switch-off. The structure of the above-mentioned lamps and lanterns are simple and easily embodied, which is indeed an important improvement in this technical field.

It cannot be denied that such energy-saving type lamps and lanterns with photocell are adapted for long-time illumination in all public space, such as hotels, hospitals, railway and bus stations, large scale parking area etc and with which the energy-saving is significant.

The disclosure of the present invention is one of the preferred embodiments, the partial variations or amendments from the technical thought of the present invention and are easily inferred by the technician knowing this field, are not apart from the scope and range of the claimed patent for the present invention.

## Claims

1. A photo diode lamp, its constitution includes a lamp head, a receiving body an outer shell, a cover and a photo sensor, **characterized in that** there are several projections and indents provided in the inner circumference at the upper side of the receiving body, a base and a circuit block are received in the receiving body, a lamp-tube is fixed on the base, a screw-thread and a wire opening are provided on its circumference, and a photo sensor including photocell is provided from the end of the wire, there are several respective projections provided in the lower end of its screw-thread, the base of the circuit block is the energy-saving type lamps and lanterns circuit, a photocell is provided thereon through an IC; the outer shell is in the form of trumpet, its outer circumference at the end with larger diameter provides a fixing hole of the photocell and several fixing slots, its hole part at the end with smaller diameter provides an inner screw-thread; there are a lot of transparent holes provided on the cover which is in the form of arch surface with convex, several clipping members are extended from its planar end.

2. The photo diode lamp according to the claim 1, **characterized in that** between the receiving body and the base is a clipping connection, between the outer shell and the base is a screw-thread connection, between the photo sensor and the outer shell is a gluey connection and between the outer shell and the cover is a clipping connection.
